# EUROPÄISCHE PATENTANMELDUNG

(11) **EP 4 803 846 A2**
(43) Veröffentlichungstag der Anmeldung: **09.09.2026**
(21) Anmeldenummer: 26160043.1
(22) Anmeldetag: 23.02.2026
(51) Int. Cl.: F41A 17/08, F41G 1/38, F41G 1/46, F41G 3/06

(54) **SYSTEM ZUR UNTERSTÜTZUNG EINES NUTZERS EINER JAGDWAFFE**

(30) Priorität: 06.03.2025 DE 102025108612
(71) Anmelder: Carl Zeiss AG, 73447 Oberkochen (DE)
(72) Erfinder: Tobisch, Alexander, 73447 Oberkochen (DE); STARK, Christoph, 73447 Oberkochen (DE)
(74) Vertreter: FDST Patentanwälte

(57) **Zusammenfassung**

Es wird ein System (1) zur Unterstützung eines Nutzers angegeben. Dieses weist Sensorik zur Detektion einer Schussabgabe, zur Erfassung einer Ausrichtung der Jagdwaffe und zur Erfassung einer Position der Jagdwaffe im Raum, sowie eine Vorrichtung zur Ermittlung einer Entfernung der Jagdwaffe zu einem Wildstück, auf. Ferner weist das System (1) eine Nutzerschnittstelle (8), ein Display (9) und einen Controller (6) auf, der dazu eingerichtet ist:
* mittels des ersten Sensors (30) die Schussabgabe zu detektieren,
* mittels des zweiten Sensors (31) die Ausrichtung der Jagdwaffe und mittels des dritten Sensors (38, 56) die Position der Jagdwaffe zum Zeitpunkt der Schussabgabe zu erfassen,
* wenigstens ein zu der Schussabgabe, insbesondere zeitlich, korrespondierendes Schusszeichen zu erfassen,
* unter Berücksichtigung zumindest der Ausrichtung und der Position der Jagdwaffe und deren Entfernung zu dem Wildstück einen Anschussbereich (60) zu bestimmen,
* einen Weg zu dem Anschussbereich (60) zu bestimmen,
* im Anschussbereich (60) wenigstens ein Pirschzeichen (70) zu erfassen, sowie
* anhand des wenigstens einen Schuss- und/oder Pirschzeichens (70) auf eine Letalität des Schusses, auf eine zumindest anfängliche Fluchtroute und/oder auf eine Ausprägung einer erforderlichen Nachsuche zu schließen und diese dem Nutzer mitzuteilen.

## Beschreibung

Die Erfindung betrifft ein System zur Unterstützung eines Nutzers einer Jagdwaffe, das insbesondere dazu dienen soll, das Auffinden eines geschossenen Wildstücks im Bereich des Anschusses oder auch bei einer Nachsuche zu erleichtern.

Auf der Jagd kommt es häufig zu der Situation, dass ein angeschossenes Wildstück nicht unmittelbar am Anschuss verendet, sondern vom Anschuss flüchtet. Im Zusammenhang mit dem Auffinden eines geschossenen Wildstücks bezieht sich der Begriff "Anschuss" auf den Ort, an dem das Wildstück verweilte, als es vom Projektil der Jagdwaffe getroffen wurde. Alternativ, aber für den vorliegenden Zusammenhang weniger relevant, wird unter "Anschuss" auch die Position des Einschlags des Projektils im Wildstück verstanden. Flüchtet das Wildstück, ist meist eine Nachsuche erforderlich. Diese wird häufig jedoch nicht unmittelbar, sondern meist mit Wartezeiten von mehreren Stunden, durchgeführt. Hintergrund ist hier unter anderem, dass wundgeschossenes Wild nicht durch die Nachsuche aufgescheucht werden soll und somit weiter flieht. Vielmehr soll ein Adrenalinabbau abgewartet werden.

Ausschlaggebend für eine Entscheidung über eine Nachsuche sind hierbei Beobachtungen über das Verhalten des Wildstücks beim Antragen des Schusses (Schussabgabe). Dies wird als "Schusszeichen" bezeichnet. Weitere Entscheidungsgrundlagen sind sogenannten "Pirschzeichen". Dabei handelt es sich um Spuren im Bereich des Anschusses (Blut, Wildbret, Haare), (Tritt-) Spuren im Boden und dergleichen.

Sofern nicht das Gelände näherungsweise völlig frei ist (bspw. ein abgeernteter Acker), sondern auch im Bereich des Anschusses Versteckmöglichkeiten, z. B. hohes Gras oder Getreide, aber auch hügeliges Gelände, bietet, ist das Auffinden des Anschusses häufig bereits erschwert. Mit zunehmender Routine ist ein Jäger zwar meist in der Lage, auch ohne elektronische Hilfsmittel eine Schussentfernung vergleichsweise genau abzuschätzen und auch anhand von markanten Punkten im Gelände den Anschuss zu lokalisieren und wiederzufinden. Allerdings kommt hier auch bei geübten Jägern teilweise der Umstand mit hinzu, dass nach dem Verlassen der eigenen Schussposition aufgrund veränderter Perspektive das Gelände vor Ort, also zumindest grob im Bereich des Anschusses, bereits anders wirkt und somit die Orientierung erschwert ist.

Der Erfindung liegt die Aufgabe zugrunde, einem Nutzer einer Schusswaffe, insbesondere einer Jagdwaffe, Hilfestellung für das Auffinden eines geschossenen Wildstücks zu leisten.

Diese Aufgabe wird erfindungsgemäß gelöst durch ein System mit den Merkmalen des Anspruchs 1. Weitere vorteilhafte und teils für sich erfinderische Ausführungsformen und Weiterbildungen sind in den Unteransprüchen und der nachfolgenden Beschreibung dargelegt.

Das erfindungsgemäße System dient zur Unterstützung eines Nutzers einer Jagdwaffe (bspw. eines Jägers), insbesondere beim Auffinden und/oder einer Entscheidungsfindung über eine eventuell erforderliche Nachsuche. Hierzu weist das System erste Mittel zur Erfassung, insbesondere in Form eines ersten Sensors zur Detektion, einer Schussabgabe aus einer (der) Jagdwaffe des Nutzers, einen zweiten Sensor, der zumindest in einem bestimmungsgemäßen Einsatzzustand mittelbar oder unmittelbar an der Jagdwaffe befestigt ist, und zur Erfassung einer Ausrichtung der Jagdwaffe im Raum eingerichtet ist, einen dritten Sensor zur Erfassung einer Position der Jagdwaffe im Raum, eine Vorrichtung zur Ermittlung einer Entfernung der Jagdwaffe zu einem Wildstück, auf das der Schuss abgegeben wird, eine Nutzerschnittstelle, wenigstens ein Display und einen Controller auf. Der Controller ist mit dem ersten, dem zweiten und dem dritten Sensor sowie mit der Vorrichtung zur Ermittlung der Entfernung und der Nutzerschnittstelle signalübertragungstechnisch verknüpft. Der Controller ist außerdem dazu eingerichtet, mittels der ersten Mittel, bspw. also mittels des ersten Sensors, einen Hinweis auf die (insbesondere die erfolgte) Schussabgabe detektieren.

Gemäß einer (ersten) Version der Erfindung ist der Controller ferner dazu eingerichtet, mittels des zweiten Sensors die Ausrichtung der Jagdwaffe und mittels des dritten Sensors die Position der Jagdwaffe zum Zeitpunkt der Schussabgabe oder zumindest zum Zeitpunkt des Hinweises auf die Schussabgabe zu erfassen. Außerdem ist der Controller dazu eingerichtet, unter Berücksichtigung zumindest der Ausrichtung und der Position der Jagdwaffe und deren Entfernung zu dem Wildstück einen Anschussbereich (insbesondere dessen Lage oder Position in der Umgebung sowie dessen Abmessungen) zu bestimmen, d. h. einen Bereich, in dem der Anschuss mit hoher Wahrscheinlichkeit angeordnet ist. Ferner ist der Controller dazu eingerichtet, einen Weg zu dem Anschussbereich zu bestimmen und mittels der Nutzerschnittstelle dem Nutzer vorzuschlagen. Vorzugsweise nutzt der Controller hierbei Prinzipien, die aus dem Bereich der (insbesondere Wander-) Navigation bekannt sind. Optional nutzt der Controller ein entsprechendes Navigationsprogramm.

Gemäß einer weiteren (zweiten) Version der Erfindung ist der Controller, zusätzlich oder alternativ zu der vorstehend beschriebenen ersten Version, dazu eingerichtet, wenigstens ein zu der Schussabgabe, insbesondere zeitlich, korrespondierendes Schusszeichen zu erfassen. Außerdem ist der Controller auch hier dazu eingerichtet, unter Berücksichtigung zumindest der Ausrichtung und der Position der Jagdwaffe und deren Entfernung zu dem Wildstück den Anschussbereich zu bestimmen. Weiter ist der Controller dazu eingerichtet, im Anschussbereich (d. h. insbesondere, wenn sich der Nutzer mit dem erfindungsgemäßen System im Anschussbereich befindet) wenigstens ein Pirschzeichen sowie dessen Position zu erfassen, anhand des wenigstens einen Schusszeichens und/oder des wenigstens einen Pirschzeichens sowie dessen Position, insbesondere im Anschussbereich, auf eine Letalität des Schusses sowie hierauf auf eine Ausprägung einer gegebenenfalls erforderlichen Nachsuche zu schließen und diese dem Nutzer über die Nutzerschnittstelle mitzuteilen.

Gemäß einer weiteren (dritten) Version der Erfindung ist der Controller, zusätzlich oder alternativ zu der vorstehend beschriebenen ersten und/oder zweiten Version, dazu eingerichtet, wie vorstehend bereits beschrieben unter Berücksichtigung zumindest der Ausrichtung und der Position der Jagdwaffe und deren Entfernung zu dem Wildstück den Anschussbereich zu bestimmen. Weiter ist der Controller dazu eingerichtet, im Anschussbereich (d. h. insbesondere, wenn sich der Nutzer mit dem erfindungsgemäßen System im Anschussbereich befindet) und/oder entlang einer ermittelten, insbesondere geschätzten, (zumindest anfänglichen) Fluchtroute wenigstens ein Pirschzeichen sowie dessen Position zu erfassen, anhand des wenigstens einen Pirschzeichens sowie dessen Position auf eine, zumindest anfängliche, Fluchtroute oder - insbesondere im Fall, dass das Pirschzeichen bereits auf der Fluchtroute erfasst wurde - einen weiteren Verlauf der Fluchtroute (ab) zu schätzen und diese bzw. diesen dem Nutzer über die Nutzerschnittstelle mitzuteilen.

Zur Schätzung oder Ermittlung der zumindest anfänglichen, oder ausgehend von einem entlang der bereits geschätzten, anfänglichen Fluchtroute, nutzt der Controller vorzugsweise Erfahrungswerte. Diese sind beispielsweise, dass getroffenes Wild üblicherweise (oder zumindest meist oder mit hoher Wahrscheinlichkeit) bevorzugt bergab oder auch in ein Gewässer flüchtet. Die Schätzung der Fluchtroute soll hierbei insbesondere dazu dienen, der nutzenden Person, bspw. einem Jäger, einer die Nachsuche leitenden Person oder dergleichen, einen erleichterten Einstieg in die Nachsuche zu ermöglichen.

Die Erfindung unterstützt den Nutzer der Jagdwaffe, insbesondere also einen Jäger, vorteilhafterweise, angeschossenes Wild im oder im näheren Umkreis des Anschusses zu finden, so dass hier Zeit eingespart werden kann. Hierzu trägt die Ermittlung des Anschussbereichs, in dem der Anschuss mit besonders hoher Wahrscheinlichkeit liegt, sowie die Schätzung der zumindest anfänglichen Fluchtroute bei. Ebenso unterstützt die Erfindung den Nutzer bei einer Entscheidung, welche Art (Ausprägung) von Nachsuche vorteilhaft oder empfehlenswert ist.

Zur Mitteilung, insbesondere Ausgabe, von Informationen oder sonstigen Meldungen über die Nutzerschnittstelle nutzt der Controller vorzugsweise die Nutzerschnittstelle mittelbar, insbesondere um diese Informationen dem Nutzer auf dem Display anzuzeigen. Weiter optional ist die Nutzerschnittstelle auch dazu eingerichtet, eine Eingabemaske auf dem Display (Bildschirm) anzuzeigen und insbesondere auf dem Display (vorzugsweise einem berührungssensitiven Bildschirm) vorgenommene Eingaben an den Controller weiter zu geben.

Unter der "Ausprägung einer erforderlichen Nachsuche" wird hier und im Folgenden insbesondere verstanden, ob eine Nachsuche überhaupt erforderlich (oder bspw. aufgrund eines Kammerschusses, der am Ort des Anschusses zum Verenden des Wildstücks geführt hat, nicht erforderlich ist), und mit welcher Intensität die Nachsuche voraussichtlich erforderlich ist. Hier sind für unterschiedliches Wild Tabellen und/oder Entscheidungsbäume bekannt, in denen hinterlegt ist, welche Schussverletzung zu welchen Reaktionen des Wildstücks und zu welchen Arten von Nachsuchen führen kann. Während ein Kammerschuss üblicherweise mit kurzer Wartezeit von bis etwa 30 Minuten zu einer sogenannten Totsuche und einfachem Schwierigkeitsgrad bei allen Wildarten führt, können Waidwundschüsse, bspw. in Innereien, Vorder- oder Hinterlauf bei nahezu allen Wildarten zu aufwendigen Suchen mit langer Flucht, einer erforderlichen hohen Wartezeit bis zu Aufnahme der Nachsuche (bis zu 6 Stunden) und einem Einsatz eines speziell ausgebildeten Schweißhunds führen.

Abmessungen des Anschussbereichs sind insbesondere abhängig von der Schussdistanz (Entfernung zwischen Wildstück und Jagdwaffe) und auch von einem Neigungswinkel der Jagdwaffe. Dies liegt insbesondere an bekannten und/oder erwarteten Ungenauigkeiten der einzelnen Sensoren. So weisen - insbesondere zumindest preisgünstige - elektronische Kompass-Sensoren teilweise Ungenauigkeiten von bis zu +/- 5 Grad auf, wodurch bereits die Erfassung der Schussrichtung mit einer Ungenauigkeit beaufschlagt ist. Auch eine Positionsermittlung mittels Satelliten-gestützter Positionierungssysteme (auch unter GNSS bekannt) kann eine Ungenauigkeit von mehreren Metern aufweisen. Aufgrund dieser Ungenauigkeiten werden die Abmessungen des Anschussbereichs (insbesondere durch den Controller) vorteilhafterweise mit zunehmender Entfernung größer gewählt. Hierbei wird der Anschussbereich vorzugsweise in Form einer Ellipse gewählt, deren lange Achse insbesondere quer zur Schussrichtung und deren kurze Achse in Schussrichtung ausgerichtet ist. Alternativ kann aber auch ein Rechteck gewählt werden. Als Länge und Breite (d. h. insbesondere Länge der langen Achse und als Breite die Länge der kurzen Achse) werden hierbei für eine Schussentfernung von 100 Metern vorzugsweise Maße von etwa (d. h. +/- 1-2 Meter) 30 Metern bzw. 15 Metern gewählt.

Vorteilhafterweise ist der Controller auch dazu eingerichtet, den Zeitpunkt der Schussabgabe (oder zumindest des Hinweises hierauf), den Anschussbereich (d. h. insbesondere dessen Position, bspw. dessen Koordinaten), das Schusszeichen und das jeweilige Pirschzeichen sowie dessen Position in einem zugeordneten Speicher für einen späteren Zugriff abzulegen. Dies ist für eine Dokumentation und/oder eine (gegebenenfalls spätere) Abstimmung mit einer spezialisierten Person, die die Nachsuche durchführt oder leitet ("Spezialist"; auch als "Nachsuchenführer" bezeichnet), vorteilhaft.

Um den Nutzer bei der Suche nach dem Anschuss im Anschussbereich zu unterstützen, ist der Controller gemäß einer vorteilhaften Ausführung dazu eingerichtet, dem Nutzer für den Anschussbereich Teilbereiche mit unterschiedlich hoher Auffindwahrscheinlichkeit für den Anschuss mittels der Nutzerschnittstelle anzuzeigen. Insbesondere stellt der Controller diese Teilbereiche mit unterschiedlicher Farbgebung dar.

Zweckmäßigerweise ist der Controller auch dazu eingerichtet, dem Nutzer ein Suchmuster, insbesondere einen Suchpfad, durch den Anschussbereich mittels der Nutzerschnittstelle anzuzeigen. Dies ist dahingehend vorteilhaft, dass der Nutzer den Anschussbereich vorsichtig und systematisch absuchen sollte, um kein Pirschzeichen, teilweise kleinste Bluttropfen oder -spritzer, die in Gras oder auf Erde bereits nach kurzer Zeit nur noch schwierig zu sehen sind, zu übersehen und/oder unkenntlich zu machen.

Um dem Nutzer die Suche nach dem Anschuss weiter zu vereinfachen, ist der Controller gemäß einer weiteren vorteilhaften Ausführung dazu eingerichtet, den Anschussbereich in einer Karte, vorzugsweise in einer sogenannten Satellitenansicht, auf dem Display anzuzeigen und dabei Teile (Bereiche) der Karte mit einer optischen Markierung, bspw. einem Schleier - insbesondere einer Art Nebel -, zu versehen (belegen). Der Controller ist hierbei gemäß einer zweckmäßigen Variante dazu eingerichtet, nur Bereiche entlang eines von dem Nutzer bereits zurückgelegten (und somit insbesondere abgesuchten) Pfads zu und/oder durch den Anschussbereich mit der Markierung zu versehen. Beispielsweise ist der Controller dazu eingerichtet, diese Bereiche farblich hervorzuheben, optional mit einem eingefärbten (bspw. grün oder gelb) Schleier zu überdecken. Hierdurch soll es dem Nutzer leichter zur erkennen sein, welche Bereiche bereits abgesucht wurden, während die noch nicht abgesuchten Bereiche auf der Karte unmarkiert bleiben. Alternativ kann der Controller aber auch dazu eingerichtet sein, die Bereiche der Karte, die von dem Nutzer noch nicht abgeschritten und somit abgesucht wurden, mit der Markierung, insbesondere dem Schleier, belegt anzuzeigen und nur die Bereiche von dem Schleier zu befreien, die von dem Nutzer bereits abgesucht wurden. Der Schleier in letzterem Fall ist vorzugsweise vergleichbar zu einem, insbesondere aus Computerspielen bekannten, "fog of war", bei dem das Gelände einer (Spiel-) Karte nur dann sichtbar ist oder wird, wenn eigene Kräfte einen entsprechenden Teil der Karte aufgeklärt haben. In beiden vorliegenden Varianten ist die Markierung oder der Schleier (Nebel) aber vorzugsweise derart gewählt, dass die Karte und insbesondere das Gelände weiterhin durch den Schleier erkennbar bleibt.

Gemäß einer besonders zweckmäßigen Ausführung ist der Controller dazu eingerichtet, für das jeweilige Pirschzeichen eine Bildaufnahme zu erfassen und abzuspeichern.

Optional ist im vorgenannten Fall der Controller auch dazu eingerichtet, einen Bilddatenfluss zu erfassen, insbesondere indem der Nutzer angewiesen wird, eine Kamera in Richtung auf den Boden zu halten und einen Videomodus zu aktivieren (letzteres kann entfallen, wenn der Controller selbst über Steuerungsrechte für die Kamera verfügt). Der Controller kann hier zweckmäßigerweise dazu eingerichtet sein, eine Analyse der erfassten Bilddaten auf das Vorhandensein von Pirschzeichen durchzuführen.

Vorzugsweise führt der Controller eine künstliche Intelligenz aus, die zur Abschätzung der Letalität zumindest die Bildaufnahme des einen oder des jeweiligen Pirschzeichens analysiert. Die künstliche Intelligenz kann hier eine Entscheidungsbaumstruktur aufweisen. Ebenso kann die künstliche Intelligenz aber auch als neuronales Netz oder dergleichen ausgebildet sein. Eine künstliche Intelligenz hat meist gegenüber computergestützten Berechnungsmethoden (insbesondere Simulationen) den Vorteil einer ungleich kürzeren Berechnungsdauer. Einbußen hinsichtlich einer Genauigkeit können hierbei häufig in Kauf genommen werden und/oder werden durch den zeitlichen Vorteil aufgehoben. Merkmale eines Pirschzeichens für die Einschätzung der Letalität sind für Blutspuren beispielsweise Menge und Farbe (hellrot oder dunkelrot), Tropf- oder Spritzmuster und dergleichen. Ebenso kann ein Pirschzeichen auch Ausschuss, bspw. Wildbret, Haare und/oder Knochensplitter, aufweisen, der auf eine Letalität hinweisen kann. Pirschzeichen und deren Interpretation sind dabei hinlänglich bekannt und/oder mit Erfahrungswerten belegt. Vorzugsweise ist die Entscheidungsbaumstruktur auf diesen Erfahrungswerten aufgebaut. Das neuronale Netz ist zweckmäßigerweise mit diesen Erfahrungswerten und entsprechenden Beispielen trainiert.

Besonders bevorzugt ist der Controller als Teil eines smarten Mobilgeräts ausgebildet. Insbesondere handelt es sich bei dem Controller um einen Prozessor des Mobilgeräts, das bspw. durch ein Smartphone, ein Tablet oder auch durch eine Smartwatch gebildet ist. Vorzugsweise weist das smarte Mobilgerät aber auch zur Erfassung der Bildaufnahme eine Kamera auf. Ein Smartphone oder ein Tablet bieten sich somit für den Einsatz hier an.

Der Controller ist vorzugsweise durch einen Mikrocontroller mit einem zugeordneten Speicher gebildet - in der vorstehend genannten Ausführung also durch den Mikrocontroller des smarten Mobilgeräts. Auf diesem Speicher ist die hier und im Folgenden beschriebene Funktionalität insbesondere durch eine Softwareapplikation installiert, so dass die entsprechende Funktionalität bei Ausführung der Softwareapplikation zur Verfügung steht.

Gemäß einer besonders bevorzugten Ausführung weist das System ein mit einer Zieloptik (insbesondere einem Zielfernrohr, einem Nachtsicht- oder Wärmebildvorsatzgerät oder dergleichen) der Jagdwaffe verbundenes oder reversibel verbindbares Modul auf. Dieses Modul enthält dabei zumindest den zweiten Sensor, insbesondere auch die ersten Mittel (insbesondere den ersten Sensor) und/oder den dritten Sensor, sowie eine Kommunikationsschnittstelle (oder auch: Datenschnittstelle) zu dem Controller. Prinzipiell kann das Modul bspw. mittels einer Schelle an einer beliebigen Zieloptik befestigt werden. Vorzugsweise handelt es sich bei diesem Modul aber um ein solches, dass zur - insbesondere reversiblen - Kopplung mit einer dafür vorgesehenen mechanischen und optional auch elektrischen Schnittstelle an der Zieloptik eingerichtet und vorgesehen ist. Das Modul stellt dabei eine optionale Erweiterung eines Funktionsumfangs der Zieloptik dar. Beispielsweise können hier verschiedene Module alternativ angeordnet werden, bspw. eines, das nur für eine Aktivierung und Helligkeitssteuerung einer Absehenbeleuchtung dient, eines, dass eine Entfernungsmessung ermöglicht und dergleichen. Das Modul kann dabei zu Energieversorgung eine Batteriezelle (primär oder sekundär) enthalten oder, insbesondere im Fall der elektronischen Schnittstelle zur Zieloptik (im bestimmungsgemäßen Einsatzzustand) auch an eine Energieversorgung der Zieloptik angebunden sein.

Gemäß einer weiteren zweckmäßigen Ausführung ist dem Controller wenigstens eine Schnittstelle zugeordnet, die zum Datenabruf von einer Datenbank über Spezialisten zur Nachsuche ( "Nachsuchenführer"), zum Datenaustausch mit dem (insbesondere dem zum Einsatz kommenden) Spezialisten zur Nachsuche, zum Datenaustausch (insbesondere auch zur Bildübertragung) mit einer Suchdrohne (die vorzugsweise mit einem Wärmebildegerät ausgestattet ist) und/oder zum Datenempfang zumindest von Standortsensoren wenigstens des Spezialisten - vorzugsweise aller Beteiligten, die an der Nachsuche teilnehmen und ihren Standort teilen - und/oder eines Suchhunds (insbesondere mittels eines Halsbands mit GNSS-Funktion) eingerichtet ist. Vorzugsweise ist der Controller hierbei dazu eingerichtet, Standortinformationen zu dem Spezialisten, dem Suchhund, gegebenenfalls weiterer an der Nachsuche beteiligter Personen und/oder der Suchdrohne in einer Karte anzuzeigen, insbesondere auch zu dokumentieren sowie optional auch mit den Personen zu teilen. Der aktuelle Standort kann dabei helfen, die Nachsuche zu koordinieren. Ein insbesondere gespeicherter Verlauf der jeweiligen Standorte kann helfen, Lücken bei der Nachsuche zu erkennen und gegebenenfalls zu schließen. Falls während der Nachsuche eine weitere Schussabgabe (bspw. ein Fangschuss) erforderlich ist, kann so auf einfache Weise geprüft werden, ob Sicherheitsabstände und -bereiche in Bezug auf die beteiligten Personen eingehalten sind.

Für den Fall der Datenkommunikation mit der Suchdrohne ist in den Controller zweckmäßigerweise auch eine Steuerung für die Suchdrohne integriert. Dadurch braucht der Nutzer nicht in eine separate Applikation wechseln, sondern hat alle Informationen auf einen Blick zusammen, bspw. den eigenen Standort und den Standort anderer Personen, sowie die Position der Suchdrohne und deren aktuelles Bild.

Gemäß einer weiteren zweckmäßigen Ausführung weist das System einen zumindest im bestimmungsgemäßen Einsatzzustand mit einer Zieloptik der Jagdwaffe gekoppelten Bildsensor auf, der zur Erfassung eines durch die Zieloptik dargestellten Bilds bei der Schussabgabe eingerichtet und vorgesehen ist. Vorzugsweise handelt es sich bei diesem Bildsensor um den - im Fall einer digitalen oder elektronischen Zieloptik - ohnehin vorhandenen Bildsensor der Zieloptik, der über eine entsprechende Schnittstelle auf den Controller aufgeschaltet ist (und in diesem Zustand somit einen Teil des Systems bildet). Der Controller ist gemäß dieser Ausführung insbesondere dazu eingerichtet, aus dem Bild, vorzugsweise einer Mehrzahl aufeinanderfolgender Bilder (d. h. also einem Video), bei der Schussabgabe das Schusszeichen zu ermitteln und hieraus neben der Letalität auf die zumindest anfängliche Fluchtroute zu schätzen, insbesondere unter Zuhilfenahme von Karten- und Geländedaten. Diese Karten- und Geländedaten enthalten dabei insbesondere zivile Infrastruktur (d. h. Straßen und Gebäude, 3D Terrain und Vegetation).

Optional kann der Controller auch dazu eingerichtet sein, aus der Mehrzahl aufeinanderfolgender Bilder auch den Hinweis auf die Schussabgabe abzuleiten, bspw. indem in den Bildern ein Mündungsblitz, Rauch, eine Geschossflugbahn, ein (typisches) "Verreisen" der Jagdwaffe oder dergleichen detektiert wird.

Zur Schätzung der (zumindest anfänglichen) Fluchtroute ist der Controller vorzugsweise dazu eingerichtet - optional mittels einer entsprechend trainierten künstlichen Intelligenz -, Pirschzeichen, insbesondere Positionen von mehreren Pirschzeichen im Gelände (bspw. Schweißspuren, Trittspuren), sowie optional auch mittels des vorstehend genannten Bildsensors erfasste Bilddaten hinsichtlich einer Fluchtrichtung und/oder eines Verlaufs der Fluchtroute entlang der aufgefundenen Pirschzeichen auszuwerten. Beispielsweise ist der Controller dazu eingerichtet, die Positionen der aufgefundenen Pirschzeichen in einer Karte zu einem Verlauf zu verbinden und diesen auf eine Fluchtroute zu extrapolieren. Bei der Extrapolation berücksichtigt der Controller auch Karten- und Geländedaten, bspw. um manche theoretischen Fluchtrichtungen oder -wege auszuschließen (bspw. durch ein Gewässer hindurch) und/oder in der Wahrscheinlichkeit zu reduzieren (in bewohntes Gebiet hinein).

Gemäß einer zweckmäßigen Weiterbildung ist der Controller dazu eingerichtet, anhand des wenigstens einen im Anschussbereich erfassten Pirschzeichens sowie optional auch anhand weiterer auf einem Anfangsbereich (d. h. entlang eines anfänglichen Verlaufs) der Fluchtroute erfasster Pirschzeichen die Schätzung der zumindest anfänglichen Fluchtroute anzupassen. Weicht beispielsweise eine ausgehend vom Anschussbereich auffindbare Schweißspur von der geschätzten Fluchtroute ab, kann der Controller die Fluchtroute so laufend anpassen. Die Schätzung der Fluchtroute und auch deren Anpassung erfolgt dabei vorzugsweise durch eine künstliche Intelligenz. Der Controller ist hierbei auch dazu eingerichtet, die Schätzung der Fluchtroute (insbesondere deren weiteren Verlaufs) zusätzlich anhand eines erfassten Verlaufs einer Route eines Suchhunds (bspw. des Schweißhunds des Nachsuchenführers), anhand von Karten- und Geländedaten und/oder anhand von einer Flugdrohne empfangenen Bilddaten (bspw. Wärmebilddaten) anzupassen, insbesondere also fortlaufend abzuschätzen. Für die Route des Suchhunds wird vorzugsweise dessen Halsband mit GNSS-Funktion, insbesondere also Standortdaten des Suchhunds, herangezogen. Zusätzlich nutzt der Controller auch Karten- und Geländedaten, bspw. um manche Fluchtwege auszuschließen (bspw. durch ein Gewässer hindurch) und/oder in der Wahrscheinlichkeit zu reduzieren (in bewohntes Gebiet). Bilddaten einer Flugdrohne können hier ebenfalls genutzt werden, um bspw. aktuelle Hindernisse (z. B. Hochwasser) in die Geländedaten mit einzubeziehen.

Der Controller ist zweckmäßigerweise dazu eingerichtet, eine derart angepasste Schätzung der Fluchtroute - also insbesondere deren angepassten weiteren Verlauf - über die Nutzerschnittstelle mitzuteilen, bspw. auf der im Display angezeigten Karte darzustellen.

Zweckmäßigerweise ist der Controller dazu eingerichtet, auf Basis der Einschätzung zur Letalität des Schusses und optional auch der zumindest anfänglichen Fluchtroute sowie in Abhängigkeit einer in der Datenbank vermerkten Qualifikation der Spezialisten für die Nachsuche unterschiedliche Spezialisten vorzuschlagen (anzuzeigen). Ist zum Beispiel aufgrund eines (vermutlichen) Kammerschusses und einer anfänglichen Fluchtroute in Richtung auf lichten Wald zu von einer einfachen Nachsuche ohne speziell ausgebildeten Schweißhund auszugehen, wird bspw. nur ein Spezialist mit einem "normal" ausgebildeten Jagdhund angezeigt. Dagegen schlägt der Controller bei einem Schuss in einen Lauf und einer anfänglichen Fluchtroute in Richtung dichter Bewaldung einen Spezialisten mit einem speziell ausgebildeten Schweißhund vor, da hier von einer langwierigen Nachsuche auszugehen ist. Außerdem gibt der Controller auch erfahrungsgemäß erforderliche Wartezeiten bis zur Aufnahme der Nachsuche an.

Grundsätzlich können die Mittel zur Erfassung des Hinweises auf die Schussabgabe neben oder alternativ zu der vorstehend beschriebenen optischen Erfassung auch durch die Nutzerschnittstelle gebildet sein, in die der Nutzer eine Information eingibt, dass er den Schuss abgegeben hat. Bevorzugt sind aber die ersten Mittel vorzugsweise durch einen ersten Sensor zur Detektion der Schussabgabe, vorzugsweise durch einen Beschleunigungssensor und/oder ein Mikrofon gebildet. Vorzugsweise ist der erste Sensor außerdem in das vorstehend beschriebene Modul integriert. In letzterem Fall ist der erste Sensor somit besonders nah an der Schussabgabe angeordnet, im Fall des Beschleunigungssensors ist somit eine näherungsweise unmittelbare Erfassung des Rückstoßes ermöglicht. Vorteilhafterweise kann der Beschleunigungssensor, insbesondere in Form eines 3D-MEMS-Beschleunigungssensors (mikro-elektromechanisches System) oder als inertiales Mess-System in Form eines MEMS, auch den zweiten Sensor zur Erfassung der Ausrichtung der Jagdwaffe bilden oder aufweisen. Ein solcher Beschleunigungssensor oder ein solches inertiales Mess-System kann, wie bspw. aus Smartphones bekannt, auch als gyroskopischer Sensor eingesetzt werden. Die Nutzung des Mikrofons zur Erfassung des Schusses hat dabei dagegen den Vorteil, dass eine Samplingrate vergleichsweise gering gehalten werden kann, denn das akustische Abbild des Schusses ist im Vergleich zur Beschleunigung bei der Schussabgabe, die den Rückstoß bildet, länger anhaltend und kann somit auch mit einer geringeren Samplingrate hinreichend genau detektiert werden. Das Mikrofon braucht auch nicht in das Modul integriert sein, sondern kann grundsätzlich ein Mikrofon des Smartphones, das den Controller bereitstellt, sein.

Insbesondere für den Fall der Nachsuche ist der Controller auch dazu eingerichtet, Grenzen eines aktuell genutzten Jagdreviers zu berücksichtigen, bspw. aus einer entsprechenden Datenbank abzurufen und zu dokumentieren, wenn das Wildstück bei der Flucht und/oder das "Nachsuchengespann" (d. h. der Nachsuchenführer und der Suchhund, optional auch weitere beteiligte Personen) Reviergrenzen überschreitet. Optional zieht der Controller zur Dokumentation auch Bilddaten der Flugdrohne heran.

Das vorstehend beschriebene System ermöglicht neben dem vereinfachten Auffinden des Anschusses auch die Möglichkeit, die Nachsuche und/oder deren Planung zu unterstützen. Dabei weist das System aufgrund der beschriebenen Integrationsmöglichkeiten auch eine hohe Kompaktheit auf, insbesondere kann ein zusätzliches, von Jagdwaffe und Smartphon separates Gerät, vorteilhafterweise entfallen, wenn das vorstehend beschriebene Modul zum Einsatz kommt.

Die Konjunktion "und/oder" ist hier und im Folgenden insbesondere derart zu verstehen, dass die mittels dieser Konjunktion verknüpften Merkmale sowohl gemeinsam als auch als Alternativen zueinander ausgebildet sein können.

Nachfolgend werden Ausführungsbeispiele der Erfindung anhand einer Zeichnung näher erläutert. Darin zeigen schematisch und beispielhaft:
- Fig. 1: in einer Prinzipdarstellung ein System zur Unterstützung eines Nutzers,
- Fig. 2-5: jeweils in perspektivischer und ausschnitthafter Darstellung verschiedene Ausführungsbeispiele des Systems, und
- Fig. 6, 7: jeweils in einer Prinzipdarstellung ein Smartphone mit einer Applikation zu zwei unterschiedlichen Zeitpunkten und Anwendungen innerhalb der Applikation.

Einander entsprechende Teile sind in allen Figuren stets mit gleichen Bezugszeichen versehen.

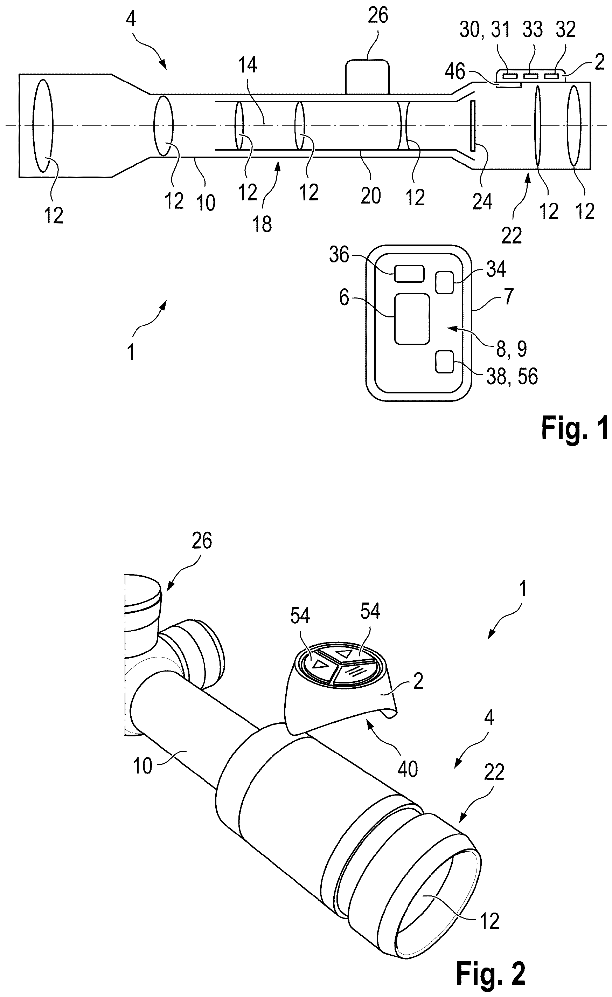

Fig. 1 zeigt schematisch ein System 1 zur Unterstützung eines Nutzers. Das System 1 weist im vorliegenden Ausführungsbeispiel ein Modul 2 auf, das in nachfolgend näher beschriebener Art und Weise an einer Zieloptik, hier konkret ein Zielfernrohr 4, für eine Schusswaffe, befestigt oder in das Zielfernrohr 4 integriert ist. Des Weiteren weist das System 1 auch einen Controller 6 auf, der im vorliegenden Ausführungsbeispiel durch einen Mikroprozessor eines smarten Mobilgeräts, hier ein Smartphone 7, gebildet ist. Das Smartphone 7 weist hierbei auch eine Nutzerschnittstelle 8 für den Nutzer zu dem System 1 sowie ein Display 9 auf.

Das Zielfernrohr 4 weist ein rohrförmiges (Außen-) Gehäuse 10 auf, in dem mehrere Linsen 12 entlang eines Lichtwegs 14 aufeinanderfolgend angeordnet sind. Die Linsen 12 bilden dabei wenigstens eine Objektiv-Linsengruppe 16 und eine Linsengruppe eines sogenannten Umkehrsystems 18, das in einem "Innentubus" 20, d. h. einem rohrförmigen Halter, bildseitig auf die Objektiv-Linsengruppe 16 folgend im Gehäuse 10 angeordnet ist. Auf dieses Umkehrsystem 18 folgend ist bildseitig eine weitere Linsengruppe im Gehäuse 10 angeordnet, die ein Okular 22 bildet. Im dargestellten Ausführungsbeispiel ist ein Absehen-Element 24 am okularseitigen Ende des Innentubus 20 angeordnet. Dieses Absehen-Element 24 ist beispielsweise durch eine Glasscheibe gebildet, die aufgedruckt, geätzt oder anderweitig sichtbar gemacht eine Absehenmarkierung trägt. Diese Absehenmarkierung ruft in einem durch das Okular 22 ersichtliche Bild ein Absehen (meist eine Art Fadenkreuz oder dergleichen) hervor. Das Gehäuse 10 trägt einen Verstellturm 26, der eine Verstellmechanik (nicht näher dargestellt) umfasst, die im vorliegenden Ausführungsbeispiel auf den Innentubus 20 wirkt und bei Betätigung das Umkehrsystem 10 gegenüber dem Lichtweg 14 verkippt. Das Absehen-Element 24 ist am bildseitigen Ende des Umkehrsystems 18 im Drehpunkt des Innentubus 20 angeordnet, so dass das Absehen-Element 24 selbst quasi ortsfest verbleibt. Eine relative Verstellung des Absehens im von einem Nutzer (Schützen, Nutzer) betrachtbaren Bild wird hierbei durch die Verkippung des Umkehrsystems 18 hervorgerufen.

In einem alternativen, nicht dargestellten, Ausführungsbeispiel ist das Absehen-Element 24 zwischen der Objektiv-Linsengruppe 16 und dem Umkehrsystem 18 angeordnet. In diesem Fall wirkt die Verstellmechanik auf das Absehen-Element 24 und versetzt dieses relativ zum Lichtweg 14 der Objektiv-Linsengruppe 16.

Wie aus Fig. 1 hervorgeht ist das Modul 2 objektivseitig außen am Gehäuse 10 des Zielfernrohrs 4 angeordnet.

Das Modul 2 weist Mittel zur Detektion einer Schussabgabe auf, hier in Form eines ersten Sensors 30, der dazu eingerichtet ist, die Schussabgabe aus einer Jagdwaffe (Schusswaffe, Jagdgewehr), an der das Zielfernrohr 4 montiert ist, zu detektieren. Außerdem weist das Modul 2 einen zweiten Sensor 31 auf, der dazu eingerichtet ist, eine räumliche Ausrichtung der Schusswaffe, konkret einen Neigungswinkel (Elevationswinkel), einen Gierwinkel (Schwenkwinkel) und einen Rollwinkel, zu erfassen. Außerdem umfasst das Modul 2 auch eine Vorrichtung zur Entfernungsmessung ("Rangefinder 33"). Des Weiteren weist das Modul 2 eine Datenschnittstelle 32 zur Kommunikation mit dem Controller 6, konkret über eine korrespondierende, kabellose Schnittstelle 34 des Smartphones 7, auf. Beispielsweise erfolgt die (Daten-) Kommunikation hier über den Bluetooth-Standard. Das Smartphone 7 verfügt außerdem über eine weitere Schnittstelle, hier als Internetschnittstelle 36 bezeichnet, die zur kabellosen Datenverbindung mit dem Internet, konkret mit Webseiten und/oder Servern, eingerichtet ist. Ferner weist das Smartphone 7 auch einen Sensor (dritter Sensor 38) zur Ermittlung des Standorts der Schusswaffe auf.

Fig. 2 bis 5 zeigen Varianten, wie das Modul 2 am Zielfernrohr 4 befestigt sein kann. Fig. 2 beschreibt dabei ein Ausführungsbeispiel, bei dem das Modul 2 nachträglich an einem beliebigen Zielfernrohr 4 montiert werden kann. Das Modul 2 weist bodenseitig eine runde Aussparung 40 auf, mit der das Modul 2 auf das Gehäuse 10 die Zielfernrohrs 4 aufgesetzt werden kann. Die Befestigung erfolgt hier mittels einer Schelle oder auch mittels eines Gummibands, vergleichbar zur Befestigung von Fahrradbeleuchtung am Rahmen oder Lenker. Eine signalübertragungstechnische Kopplung mit dem Zielfernrohr 3 liegt hierbei nicht vor.

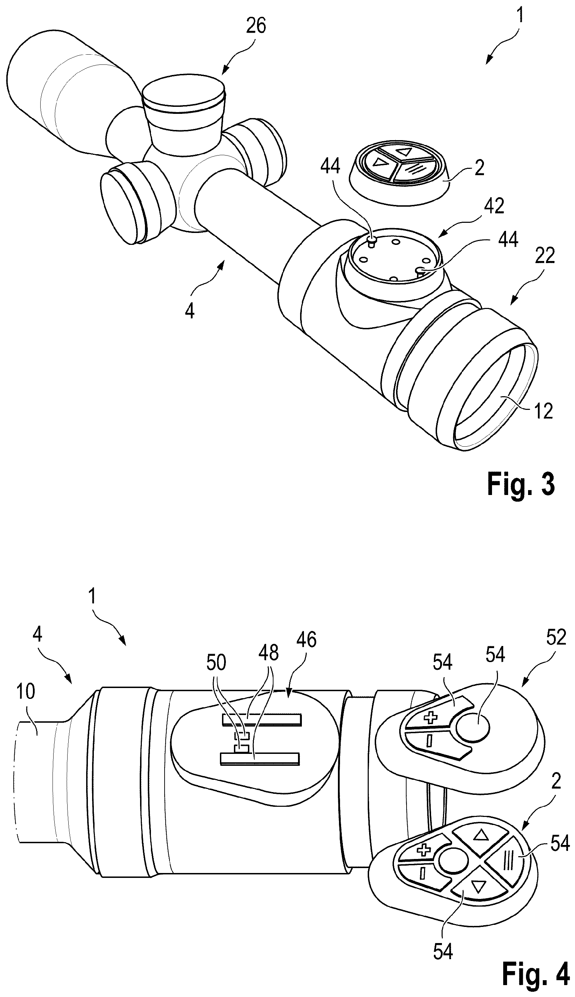

In Fig. 3 und 4 sind Varianten dargestellt, bei denen eine mechanische und auch eine signalübertragungstechnische Kopplung zwischen dem Zielfernrohr 4 und dem Modul 2 reversibel hergestellt werden kann. In Fig. 3 ist an dem Gehäuse 10 des Zielfernrohrs 4 eine kreisförmige Aufnahme 42, ähnlich einem Verstellturm, ausgebildet. Die Aufnahme 42 ist dazu eingerichtet, das Systemmodul 31 mittels einer Art Bajonettverbindung zu halten. D. h. das Modul 2 wird auf die Aufnahme 42 aufgesetzt und um ca. 20-30 Grad verdreht. In Fig. 3 sind in der Aufnahme 42 zwei Stifte 44 mit Flachkopf zu erkennen, die in korrespondierende Öffnungen im Modul 2 eingreifen und bei der Verdrehung hintergreifen. Über diese Stifte 44 kann auch eine galvanische Verbindung zu entsprechenden, elektrisch ansteuerbaren Elementen des Zielfernrohrs 4 gebildet werden, bspw. zu einer Absehenbeleuchtung 46 (s. Fig. 1).

In Fig. 4 ist eine Art Schwalbenschwanzaufnahme 46 für das Modul 2 dargestellt. Diese Schwalbenschanzaufnahme 46 weist zwei parallele Schienen 48 mit (insbesondere jeweils voneinander abgewandten) Hinterschneidungen auf, auf die das Modul 2 mit gegengleichen Schienen oder Nuten (jeweils nicht näher dargestellt) aufgeschoben werden kann. Zusätzlich sind an der Schwalbenschwanzaufnahme 46 zwei Kontaktflächen 50 ausgebildet, die mit korrespondierenden Federkontakten (nicht näher dargestellt) des Moduls 2 in der bestimmungsgemäßen Montagestellung kontaktiert sind. In Fig. 4 ist auch ein zweites Modul 52 dargestellt, das anstelle des Moduls 2 am Zielfernrohr 4 befestigt werden kann. Beispielsweise bildet dieses Modul 52 einen unterschiedlichen Funktionsumfang, bspw. nur eine Einstellmöglichkeit für die Absehenbeleuchtung 46 ab.

Mittels der Kontaktflächen 50 können vom Controller 6 ausgegebene Steuersignale im Zielfernrohr 4 empfangen werden und bspw. zur Veränderung einer Leuchtfarbe des Absehen-Elements 16 herangezogen werden.

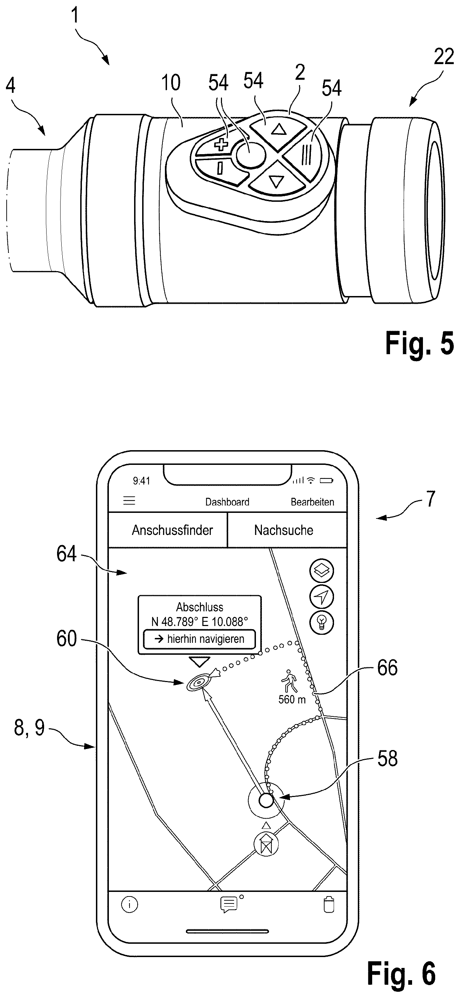

In Fig. 5 ist ein Ausführungsbeispiel dargestellt, bei dem das Modul 2 in das Zielfernrohr 4 integriert ist. Zwar ist das Modul 2 von einer Oberseite des Zielfernrohrs 4 zugänglich, aber nicht von diesem abnehmbar. In den Ausführungsbeispielen gemäß Fig. 2 bis 4 weist das Modul 2 eine eigene, zugeordnete Energiequelle, bspw. eine Knopfzelle (nicht dargestellt), auf.

Wie aus den Fig. 2 bis 5 zu entnehmen ist, weist das Modul 2 eine oder auch mehrere Tasten 54 auf einer Oberseite auf, um das Modul 2 zu aktivieren, zu deaktivieren und/oder optional unterschiedliche Funktionen anzuwählen.

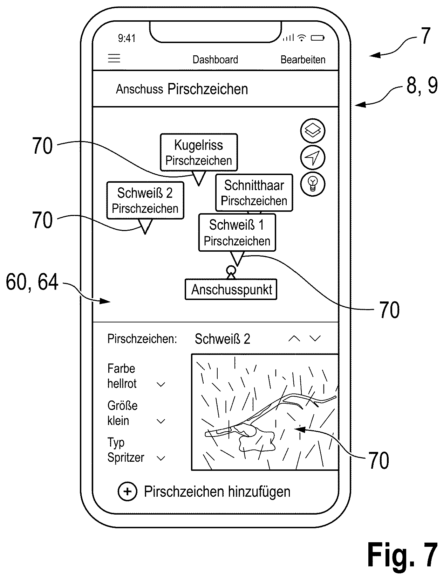

Nachfolgend werden Funktionalitäten des Systems 1 insbesondere anhand Fig. 6 und 7 näher beschrieben. Auf der Jagd aktiviert der Nutzer auf dem Smartphone 7 zunächst eine auf dem Controller 6 ausführbar installierte (Software-) Applikation, auch als "hunting app" bezeichnet. Der Controller 6 verbindet sich daraufhin mit dem Modul 2 und "wartet" auf eine Schussabgabe durch den Nutzer. Konkret erhält der Controller 6 über die (Daten-) Schnittstellen 32 und 34 die Daten (Signale) des ersten Sensors 30 und wertet diese fortlaufend aus. Der erste Sensor 30 ist durch einen mehrachsigen, konkret einen neun-achsigen, Bewegungssensor gebildet. Der Controller 6 schließt in diesem Fall auf die Schussabgabe, wenn aus dem Sensorsignal ein entsprechend hoher Beschleunigungswert, insbesondere für eine Ebene, in der das Jagdgewehr ausgerichtet ist, erkennbar ist.

Der erste Sensor 30 beinhaltet in diesem Ausführungsbeispiel auch den zweiten Sensor 31 zur Erfassung der Ausrichtung des Jagdgewehrs, denn ein solcher neunachsiger Bewegungssensor enthält üblicherweise einen dreidimensional messenden Beschleungigungssensor, sowie einen gyroskopischen Sensor und ein Magnetometer (auch: Kompasssensor) und kann somit auch genutzt werden, um zumindest Veränderungen der räumlichen Ausrichtung zu erkennen, aber auch - insbesondere unter Berücksichtigung der Erdbeschleunigung und der Himmelsrichtung - um eine absolute Ausrichtung zu ermitteln. Der Controller 6 ermittelt also für den Zeitpunkt der Schussabgabe auch die räumliche Ausrichtung des Jagdgewehrs, die erkanntermaßen einer Starttrajektorie des mit dem Jagdgewehr abgeschossenen Projektils entspricht. Anhand dieser Starttrajektorie kann die Flugbahn des Projektils berechnet werden.

Außerdem ermittelt der Controller 6 mittels des Rangefinders 33 eine Entfernung zwischen dem Jagdgewehr und einem Wildstück, das der Nutzer angesprochen und beschossen hat. Des Weiteren ermittelt der Controller 6 mittels des drittens Sensors 38, hier ein GNSS-Sensor 56 des Smartphones 7 die aktuelle eigene Position 58 (insbesondere die Koordinaten) und somit auch die Position des Jagdgewehrs (s. Fig. 6).

Das Zielfernrohr 4 weist einen Bildsensor (nicht dargestellt) zur Erfassung von Bilddaten auf. Optional kann dieser Bildsensor in ein Vorsatzgerät (oder auch ein Nachschaltgerät) für das Zielfernrohr 4 integriert sein. Das Modul 2 steht mit dem Bildsensor in datenübertragungstechnischer Verbindung. Der Controller 6 erfasst in diesem Fall ein Schusszeichen, das zeitlich mit der Schussabgabe in Verbindung steht. Bei üblichen jagdlichen Entfernungen im Bereich bis 150 Meter, selten über 200 Meter, ist von einer Flugzeit des Projektils von unter 1,5 Sekunden auszugehen, so dass eine Reaktion (das Schusszeichen) des Wildstücks auf den Beschuss, konkret auf den Einschlag des Projektils, im Bereich von bis 3 Sekunden nach der Schussabgabe zu erwarten ist. Innerhalb dieser Dauer ist ein Schusszeichen jedenfalls als mit der Schussabgabe in zeitlichem Zusammenhang stehend zu verstehen. Als Schusszeichen wird vorliegend ein visuell erkennbares Schusszeichen, insbesondere ein unter dem Begriff "Zeichnen" zusammengefasstes Verhalten des Wildstücks, aufgefasst und die von dem Bildsensor gelieferten Bilddaten daraufhin ausgewertet. Aus dem Schusszeichen schließt der Controller 6 mittels einer künstlichen Intelligenz auf die Trefferlage und die Art des Treffers. Bei einem Kammertreffer bäumt sich Rotwild meist auf, bei einem Treffer an den Rückenwirbeln (insbesondere den Dornfortsätzen; sogenannter Krellschuss), bricht Rotwild meist sofort zusammen, erhebt sich aber nach kurzer Zeit wieder. Entsprechendes Verhalten bei anderen Treffer- und Wildtierarten ist hierbei einschlägig bekannt.

Der Controller 6 ermittelt zunächst anhand der Entfernung zum Wildstück und der Ausrichtung des Jagdgewehrs eine Lage des Anschusses im Gelände und legt aufgrund zu erwartender Ungenauigkeiten einen "Anschussbereich 60" um die ermittelte Lage des Anschusses. Beispielsweise wird eine Ellipse mit einer kurzen Achse von 15 Metern und einer langen Achse von 30 Metern bei einer Schussentfernung von 100 Metern in der Ebene als Abmessung des Anschussbereichs 60 gewählt. Die lange Achse ist dabei insbesondere quer zur Schussrichtung gewählt. Der Controller 6 zeigt die eigene Position 58 und den Anschussbereich 60 auf dem Display 9 des Smartphones 7 in einer Kartendarstellung 64 an. Des Weiteren ermittelt der Controller 6 einen für den Nutzer einfachen Weg 66 zum Anschussbereich 60, der beispielsweise entlang von bestehenden Feldwegen führt. Den Anschussbereich 60 codiert der Controller 6 zudem farbig in Abhängigkeit von einer Auffindwahrscheinlichkeit, im vorliegenden Beispiel rot für eine erhöhte Wahrscheinlichkeit, das Wildstück oder den Anschuss aufzufinden.

Wenn der Nutzer den Anschussbereich 60 erreicht hat, gibt der Controller 6 einen Suchpfad durch den Anschussbereich 60 vor, um eine möglichst effektive Suche im Anschussbereich 60 zu ermöglichen.

Anhand des Schusszeichens schätzt der Controller 6 (mittels künstlicher Intelligenz) außerdem eine Letalität des Schusses ab, um möglichst frühzeitig eine Abschätzung über eine gegebenenfalls erforderliche Nachsuche, insbesondere deren Ausprägung (bspw. einfache Totsuche wegen Kammerschuss, einfache Suche aufgrund einer entsprechenden Trefferlage oder aufwändige Suche mit einem speziell ausgebildeten Schweißhund) geben zu können. In diese Abschätzung gehen - optional nachträglich oder fortlaufend - weitere aufgefundene Informationen ein. So fordert der Controller 6 den Nutzer auf, mittels des Smartphones 7 zumindest Photos (Bildaufnahmen) von aufgefundenen Pirschzeichen 70 aufzunehmen. Diese Photos wertet der Controller 6 mittels künstlicher Intelligenz (Bilderkennung bezüglich der Art von Blutspuren sowie Vergleich mit trainierten Daten bezüglich typischer Pirschzeichen für spezifische Trefferlagen) aus und gibt diese Information an den Nutzer weiter, konkret über das Display 9 aus (vgl. Fig. 7).

Anhand der Pirschzeichen 70, aber auch anhand des Schusszeichens, schließt der Controller 6 auf eine zumindest anfängliche Fluchtroute des Wildstücks. Hierbei berücksichtigt der Controller 6 auch Geländemerkmale wie Wald, zivile Infrastruktur, Versteckmöglichkeiten etc. Diese Fluchtroute gibt der Controller 6 ebenfalls über das Display 9 aus. Des Weiteren greift der Controller 6 über die Internetschnittstelle 36 auf eine Datenbank mit für die Umgebung des vorliegenden Jagdreviers hinterlegten Spezialisten (Nachsuchen- und/oder Suchhundführer) zu. Sind für diese Spezialisten Zusatzqualifikationen hinterlegt, z. B. dass einer der Spezialisten nur einen "normalen" Jagdhund hat, ein anderer aber einen besonders qualifizierten (ausgebildeten) Schweißhund, berücksichtigt der Controller 6 dies für einen Vorschlag. Hat der Controller 6 bspw. festgestellt, dass der Schuss nur einen Lauf des Wildstücks getroffen hat und somit eine besonders langwierige Nachsuche erforderlich ist, schlägt der Controller 6 bspw. nur Spezialisten mit entsprechend qualifizierten Schweißhunden vor. Optional kann der Controller 6 auf eine entsprechende Aktivierung durch den Nutzer hin, einen der vorgeschlagenen, insbesondere einen durch den Nutzer gewählten Spezialisten, kontaktieren und diesem gegebenenfalls vorab die ermittelten Daten zusenden. Hierzu speichert der Controller 6 diese Daten, zumindest einen Zeitpunkt der Schussabgabe, den Anschussbereich 60 (insbesondere dessen Position), das erfasste Schusszeichen sowie die Pirschzeichen 70 mit deren jeweilige Position für einen späteren Abruf durch den Spezialisten oder den Nutzer selbst in einem zugeordneten Speicher.

In nicht näher dargestellter Weise ist in den Controller 6 außerdem eine Drohnensteuerung für eine Drohne, bspw. mit Wärmebildgerät, integriert, die für die Nachsuche genutzt werden kann. So kann ein Drohnenbild zusätzlich zu einer Kartenansicht, auf der die geschätzte Fluchtroute angezeigt wird, eingeblendet werden.

Die hunting app kann auch mit mehreren Nutzern oder Personen, bspw. der Spezialist oder weitere an der Nachsuche beteiligte Helfer, eine Verbindung aufbauen, so dass die ermittelten Daten auch dem Spezialisten zur Verfügung gestellt (geteilt) werden kann.

Der Controller 6 ist zweckmäßigerweise auch dazu eingerichtet, während der Nachsuche die Fluchtroute fortlaufend anzupassen. Hierzu wertet der Controller 6 insbesondere weitere aufgefundene Pirschzeichen, eine vorzugsweise mittels eines GNSS-Halsbands eines Suchhunds erfasste Suchroute, (Wärme-) Bilddaten der gegebenenfalls eingesetzten Drohne aus, um bspw. Abweichungen der Suchroute des Suchhunds von der abgeschätzten Fluchtroute abzugleichen und hieraus auf den weiteren Verlauf der Fluchtroute zu schätzen. Beispielsweise berücksichtigt der Controller 6 hierbei auch Gelände- und Kartendaten, um bspw. einen Flussverlauf als für das angeschossene Wildstück unüberwindliches Hindernis auf der Fluchtroute heranzuziehen. Hierbei kann der Controller 6 auch dokumentieren und/oder anzeigen, wenn das Wildstück oder der Suchhund eine Reviergrenze überschreitet. In diesem Fall sind häufig Absprachen mit einem Reviereigner oder -verantwortlichen des benachbarten Jagdreviers erforderlich.

Ebenso ist der Controller 6 dazu eingerichtet, insbesondere über die hunting app, Standortdaten der an der Nachsuche beteiligten Personen zu erfassen und auch wiederum mit diesen Personen - vorzugsweise mittels dieser Applikation - zu teilen, so dass alle beteiligten Personen wissen, wo sich andere Personen aufhalten. Optional kann aus dieser Applikation auch die Information über Standorte anderer, nicht beteiligter, aber in der Applikation angemeldeter Personen, entnommen werden. Dies trägt zu einer erhöhten Sicherheit bei, bspw. wenn ein Fangschuss erforderlich ist.

Der Gegenstand der Erfindung ist nicht auf die vorstehend beschriebenen Ausführungsbeispiele beschränkt. Vielmehr können weitere Ausführungsformen der Erfindung von dem Fachmann aus der vorstehenden Beschreibung abgeleitet werden. Insbesondere können die anhand der verschiedenen Ausführungsbeispiele beschriebenen Einzelmerkmale der Erfindung und deren Ausgestaltungsvarianten auch in anderer Weise miteinander kombiniert werden.

### Bezugszeichenliste

- 1: System
- 2: Modul
- 4: Zielfernrohr
- 6: Controller
- 7: Smartphone
- 8: Nutzerschnittstelle
- 9: Display
- 10: Gehäuse
- 12: Linse
- 14: Lichtweg
- 16: Objektiv-Linsengruppe
- 18: Umkehrsystem
- 20: Innentubus
- 22: Okular
- 24: Absehen-Element
- 26: Verstellturm
- 30: erster Sensor
- 31: zweiter Sensor
- 32: Datenschnittstelle
- 34: Schnittstelle
- 36: Internetschnittstelle
- 38: dritter Sensor
- 40: Aussparung
- 42: Aufnahme
- 44: Stift
- 46: Schwalbenschwanzaufnahme
- 48: Schiene
- 50: Kontaktfläche
- 52: Modul
- 54: Taste
- 56: GNSS-Sensor
- 58: Position
- 60: Anschussbereich
- 64: Kartendarstellung
- 66: Weg
- 70: Pirschzeichen

## Patentansprüche

1. System (1) zur Unterstützung eines Nutzers einer Jagdwaffe, aufweisend
- erste Mittel (30) zur Erfassung einer Schussabgabe aus der Jagdwaffe,
- einen zweiten Sensor (31), der zumindest in einem bestimmungsgemäßen Einsatzzustand mittelbar oder unmittelbar an der Jagdwaffe befestigt ist und zur Erfassung einer Ausrichtung der Jagdwaffe im Raum eingerichtet ist,
- einen dritten Sensor (38, 56) zur Erfassung einer Position der Jagdwaffe im Raum
- eine Vorrichtung zur Ermittlung einer Entfernung der Jagdwaffe zu einem Wildstück, auf das der Schuss abgegeben wird,
- eine Nutzerschnittstelle (8),
- wenigstens ein Display (62), und
- einen Controller (6), der mit den ersten Mitteln (30) sowie dem zweiten und dem dritten Sensor (31, 38, 56) sowie mit der Vorrichtung zur Ermittlung der Entfernung und der Nutzerschnittstelle (8) signalübertragungstechnisch verknüpft ist, wobei der Controller (6) dazu eingerichtet ist,
* mittels der ersten Mittel (30) einen Hinweis auf die Schussabgabe zu erfassen,
* mittels des zweiten Sensors (31) die Ausrichtung der Jagdwaffe und mittels des dritten Sensors (38, 56) die Position der Jagdwaffe zum Zeitpunkt der Schussabgabe oder zumindest zum Zeitpunkt des Hinweises auf die Schussabgabe zu erfassen,
* unter Berücksichtigung zumindest der Ausrichtung und der Position der Jagdwaffe und deren Entfernung zu dem Wildstück einen Anschussbereich (60) zu bestimmen, und
* einen Weg zu dem Anschussbereich (60) zu bestimmen und mittels der Nutzerschnittstelle (8) dem Nutzer vorzuschlagen.

2. System (1) zur Unterstützung eines Nutzers einer Jagdwaffe, insbesondere nach Anspruch 1, aufweisend
- erste Mittel (30) zur Erfassung einer Schussabgabe aus der Jagdwaffe,
- einen zweiten Sensor (31), der zumindest in einem bestimmungsgemäßen Einsatzzustand mittelbar oder unmittelbar an der Jagdwaffe befestigt ist und zur Erfassung einer Ausrichtung der Jagdwaffe im Raum eingerichtet ist,
- einen dritten Sensor (38, 56) zur Erfassung einer Position der Jagdwaffe im Raum
- eine Vorrichtung zur Ermittlung einer Entfernung der Jagdwaffe zu einem Wildstück, auf das der Schuss abgegeben wird,
- eine Nutzerschnittstelle (8),
- wenigstens ein Display (62), und
- einen Controller (6), der mit den ersten Mitteln (30) sowie dem zweiten und dem dritten Sensor (31, 38, 56) sowie mit der Vorrichtung zur Ermittlung der Entfernung und der Nutzerschnittstelle (8) signalübertragungstechnisch verknüpft ist, wobei der Controller (6) dazu eingerichtet ist,
* mittels der ersten Mittel (30) einen Hinweis auf die Schussabgabe zu erfassen,
* wenigstens ein zu der Schussabgabe, insbesondere zeitlich, korrespondierendes Schusszeichen zu erfassen,
* unter Berücksichtigung zumindest der Ausrichtung und der Position der Jagdwaffe und deren Entfernung zu dem Wildstück einen Anschussbereich (60) zu bestimmen,
* im Anschussbereich (60) wenigstens ein Pirschzeichen (70) sowie dessen Position zu erfassen,
* anhand des wenigstens einen Schusszeichens und/oder des wenigstens einen Pirschzeichens (70) sowie dessen Position, insbesondere im Anschussbereich (60), auf eine Letalität des Schusses sowie hierauf auf eine Ausprägung einer gegebenenfalls erforderlichen Nachsuche zu schließen und diese dem Nutzer über die Nutzerschnittstelle (8) mitzuteilen.

3. System (1) zur Unterstützung eines Nutzers einer Jagdwaffe, insbesondere nach einem der Ansprüche 1 oder 2, aufweisend
- erste Mittel (30) zur Erfassung einer Schussabgabe aus der Jagdwaffe,
- einen zweiten Sensor (31), der zumindest in einem bestimmungsgemäßen Einsatzzustand mittelbar oder unmittelbar an der Jagdwaffe befestigt ist und zur Erfassung einer Ausrichtung der Jagdwaffe im Raum eingerichtet ist,
- einen dritten Sensor (38, 56) zur Erfassung einer Position der Jagdwaffe im Raum
- eine Vorrichtung zur Ermittlung einer Entfernung der Jagdwaffe zu einem Wildstück, auf das der Schuss abgegeben wird,
- eine Nutzerschnittstelle (8),
- wenigstens ein Display (62), und
- einen Controller (6), der mit den ersten Mitteln (30) sowie dem zweiten und dem dritten Sensor (31, 38, 56) sowie mit der Vorrichtung zur Ermittlung der Entfernung und der Nutzerschnittstelle (8) signalübertragungstechnisch verknüpft ist, wobei der Controller (6) dazu eingerichtet ist,
* mittels der ersten Mittel (30) einen Hinweis auf die Schussabgabe zu erfassen,
* mittels des zweiten Sensors (31) die Ausrichtung der Jagdwaffe und mittels des dritten Sensors (38, 56) die Position der Jagdwaffe zum Zeitpunkt der Schussabgabe zu erfassen,
* unter Berücksichtigung zumindest der Ausrichtung und der Position der Jagdwaffe und deren Entfernung zu dem Wildstück einen Anschussbereich (60) zu bestimmen,
* im Anschussbereich (60) und/oder entlang einer ermittelten Fluchtroute wenigstens ein Pirschzeichen (70) sowie dessen Position zu erfassen,
* anhand des wenigstens einen Pirschzeichens (70) sowie dessen Position eine Fluchtroute oder deren weiteren Verlauf zu schätzen und diese bzw. diesen dem Nutzer über die Nutzerschnittstelle (8) mitzuteilen.

4. System nach einem der Ansprüche 1 bis 3,
wobei der Controller (6) dazu eingerichtet ist, dem Nutzer für den Anschussbereich (60) Teilbereiche mit unterschiedlich hoher Auffindwahrscheinlichkeit für den Anschuss mittels der Nutzerschnittstelle (8) anzuzeigen, und insbesondere dem Nutzer ein Suchmuster durch den Anschussbereich (60) mittels der Nutzerschnittstelle (8) anzuzeigen.

5. System nach einem der Ansprüche 1 bis 4,
wobei der Controller (6) dazu eingerichtet ist, den Anschussbereich (60) in einer Karte auf dem Display (62) anzuzeigen, dabei Bereiche der Karte, insbesondere Bereiche entlang eines von dem Nutzer bereits zurückgelegten Pfads zu und/oder durch den Anschussbereich (60), mit einer optischen Markierung zu versehen.

6. System nach einem der Ansprüche 2 bis 5,
wobei der Controller (6) dazu eingerichtet ist, für das jeweilige Pirschzeichen (70) eine Bildaufnahme zu erfassen und abzuspeichern.

7. System nach Anspruch 6,
wobei der Controller (6) eine künstliche Intelligenz ausführt, die zur Abschätzung der Letalität zumindest die Bildaufnahme des oder des jeweiligen Pirschzeichens (70) analysiert.

8. System nach einem der Ansprüche 1 bis 7,
wobei der Controller (6) als Teil eines smarten Mobilgeräts (8) ausgebildet ist, insbesondere wobei das smarte Mobilgerät (8) zur Erfassung der Bildaufnahme eine Kamera aufweist.

9. System nach einem der Ansprüche 1 bis 8,
aufweisend ein mit einer Zieloptik (4) der Jagdwaffe verbundenes oder reversibel verbindbares Modul (2), das zumindest den zweiten Sensor (31), insbesondere auch die ersten Mittel (30) und/oder den dritten Sensor (38, 56), sowie eine Kommunikationsschnittstelle (32) zu dem Controller (6) enthält.

10. System nach einem der Ansprüche 2 bis 9,
wobei dem Controller (6) wenigstens eine Schnittstelle (36) zugeordnet ist, die zum Datenabruf von einer Datenbank über Spezialisten zur Nachsuche, zum Datenaustausch mit dem Spezialisten zur Nachsuche, zum Datenaustausch mit einer Suchdrohne und/oder zum Datenempfang zumindest von Standortsensoren wenigstens des Spezialisten und/oder eines Suchhunds eingerichtet ist, insbesondere wobei der Controller (6) dazu eingerichtet ist, Standortinformationen zu dem Spezialisten, dem Suchhund und/oder der Suchdrohne in einer Karte anzuzeigen und insbesondere auch zu dokumentieren.

11. System nach Anspruch 10,
wobei in den Controller (6) eine Steuerung für die Suchdrohne () integriert ist.

12. System nach einem der Ansprüche 3 bis 11,
aufweisend einen zumindest im bestimmungsgemäßen Einsatzzustand mit einer Zieloptik (4) der Jagdwaffe gekoppelten Bildsensor zur Erfassung eines durch Zieloptik (4) dargestellten Bilds bei der Schussabgabe, wobei der Controller (6) dazu eingerichtet ist, aus dem Bild, vorzugsweise einer Mehrzahl aufeinanderfolgender Bilder, bei der Schussabgabe das Schusszeichen zu ermitteln und hieraus auf die zumindest anfängliche Fluchtroute zu schätzen, insbesondere unter Zuhilfenahme von Karten- und Geländedaten.

13. System nach Anspruch 12,
wobei der Controller (6) dazu eingerichtet ist, anhand des wenigstens einen im Anschussbereich (60) erfassten Pirschzeichens (70) sowie optional auch anhand weiterer entlang der Fluchtroute () erfasster Pirschzeichen (70), anhand eines erfassten Verlaufs einer Route eines Suchhunds, anhand von Karten- und Geländedaten und/oder anhand von einer Flugdrohne empfangenen Bilddaten die Schätzung der zumindest anfänglichen Fluchtroute anzupassen und insbesondere über die Nutzerschnittstelle (8) mitzuteilen.

14. System nach einem der Ansprüche 2 bis 13,
wobei der Controller (6) dazu eingerichtet ist, Standortdaten von an der Nachsuche beteiligen Personen zu erfassen und für diese Personen zu teilen.

15. System nach einem der Ansprüche 1 bis 14,
wobei die ersten Mittel (30) durch einen Beschleunigungssensor und/oder ein Mikrofon gebildet sind, sowie vorzugsweise in das Modul (2) gemäß Anspruch 10 integriert sind.
